# EUROPEAN PATENT APPLICATION

(11) **EP 0 691 625 A1**
(43) Date of publication of application: **10.01.1996**
(21) Application number: 94201991.0
(22) Date of filing: 08.07.1994
(51) Int. Cl.: G06K 19/077

(54) **A portable radio frequency enclosure for a smart card**

(71) Applicant: AT&T Corp., New York, NY 10013-2412 (US)
(72) Inventor: Mandelbaum, Richard, Manalapan, New Jersey 07726 (US); Zempol, Kenneth Robert, Randolf, New Jersey 07869 (US)
(74) Representative: Watts, Christopher Malcolm Kelway, Dr.

(57) **Abstract**

A pocket-size jacket (40) or enclosure for a smart card (20) is provided for facilitating two-way radio frequency read/write communications with a remotely associated interrogation station. The jacket includes a sleeve-like opening adapted to receive and position a smart card for providing power from the jacket to the card and also for enabling read/write communications between the card and the associated interrogation station. Power for circuitry both within the jacket and on the smart card is provided by an internal battery operated power supply (401) in the jacket. Normally held in the off-state, radiated energy from an interrogation site associated with the interrogation station turns on the jacket's internal power supply when the smart card/jacket combination is within a few feet of the radiation source at the interrogation site. A holder of the smart card/jacket combination is thus able to conduct a data transaction with the interrogation station either while standing near or moving past the interrogation site for such station. When the smart card/jacket combination is outside of the field of the radiated energy from the interrogation site, power to all the circuitry in the jacket and the card are turned off, thereby providing an extended operating life for the battery operated power supply.

## Description

### Background of the Invention

### 1. Technical Field

This invention relates to a system which uses smart cards, and more particularly, to a system which uses smart cards for processing and communicating data while in a mobile environment.

### 2. Description of the Prior Art

Wireless technology is fueling a major revolution in communications. This technology allows new access connections to landline networks. However, the impact of wireless is far more profound than simply being another method of access. Wireless technology allows the customer to have mobility in his or her communications and not be constrained to the tether of wired access. Wireless technology also permits the customer to gain access to an application from wherever he or she wishes, within the constraints of wireless network deployment and range.

What is still in its infant stages, however, is wireless communications which enables a user of a smart card-like device to become completely untethered when using such a device in short range wireless communications.

A number of proposals have been made with regard to providing a customer with a wireless connection for performing various financial transactions. One such proposal, for example, is described in United States Patent 4,977,501 which issued to J. P. Lefevre on December 11, 1990. This patent describes a fare collection system for operators of transport vehicles wherein information is periodically exchanged at microwave frequencies between a smart card-like ticket, held by a passenger in the vehicle, and a transceiver also in the vehicle. A credit balance initially assigned to the ticket is decremented by circuitry in the transceiver which interrogates the ticket.

Other proposals have also been made with regard to providing a holder of a smart card-like device with an identifying radio frequency signal which uniquely identifies the individual holder of the device. One proposed wireless system for providing a radio frequency emitting identifier is described in U. S. Patent 4,3,84,288 issued to C. A. Walton on May 17, 1983. This patent describes an electronic identification system comprising a credit card-shaped identifier which generates a programmable pulse position-modulated signal in the radio frequency range for identification of the user.

Both of the above and other available prior art systems employ batteries therein which either must be replaced or recharged frequently due to the requirement that at least some of the circuitry in these systems must continually remain in an operational state in order to respond to a radio-frequency interrogation signal. It is desirable, therefore, to have a wireless interrogatable and updatable portable system in which the shelf life of the battery therein is not appreciably reduced, yet which operates in a fully responsive manner when receiving a radio-frequency interrogation signal.

### Summary of the Invention

The prior art problem is solved in accordance with the present invention by providing a portable jacket or pocket-size enclosure for a smart card, wherein the jacket and card are both configured in an active state only when communicating with an interrogation station generating a radio-frequency interrogating signal.

Power for circuitry both within the jacket and on the smart card is provided by an internal battery operated power supply in the jacket. Normally held in the off-state, radiated energy from an interrogation site associated with the interrogation station turns on the jacket's internal power supply when the smart card/jacket combination is within reception range, typically a few feet from the source, of the radiated energy at the interrogation site.

When the smart card/jacket combination is outside of the field of the radiated energy from the interrogation site, power to all the circuitry in the jacket and the card are turned off, thereby providing an extended operating life for the battery operated power supply.

### Brief Description of the Drawing

This invention and its mode of operation will be more clearly understood from the following detailed description when read with the appended drawing in which:
FIG. 1 is a block diagram of an interrogator, a smart card and a radio frequency jacket usable for incorporating the present invention;
FIG. 2 is an illustration of the top surface and a side view of the jacket, and also the top surface view of the smart card;
FIG. 3 is an illustration of the jacket and smart card as they appear when the smart card is inserted into the jacket;
FIG. 4 is a block diagram of the interface circuitry in the jacket for providing communications between the interrogator and the smart card, in accordance with the present invention;
FIG. 5 is a simplified diagram for illustrating the interaction between the interrogator, the jacket and the smart card for facilitating two-way radio frequency read/write communications, in accordance with the present invention; and
FIG. 6 is an illustration of selected circuitry in the jacket including an antenna, a bandpass filter and a detector circuit, in accordance with the present invention.

Throughout the drawing, the same elements when shown in more than one figure are designated by the same reference numerals.

### Detailed Description

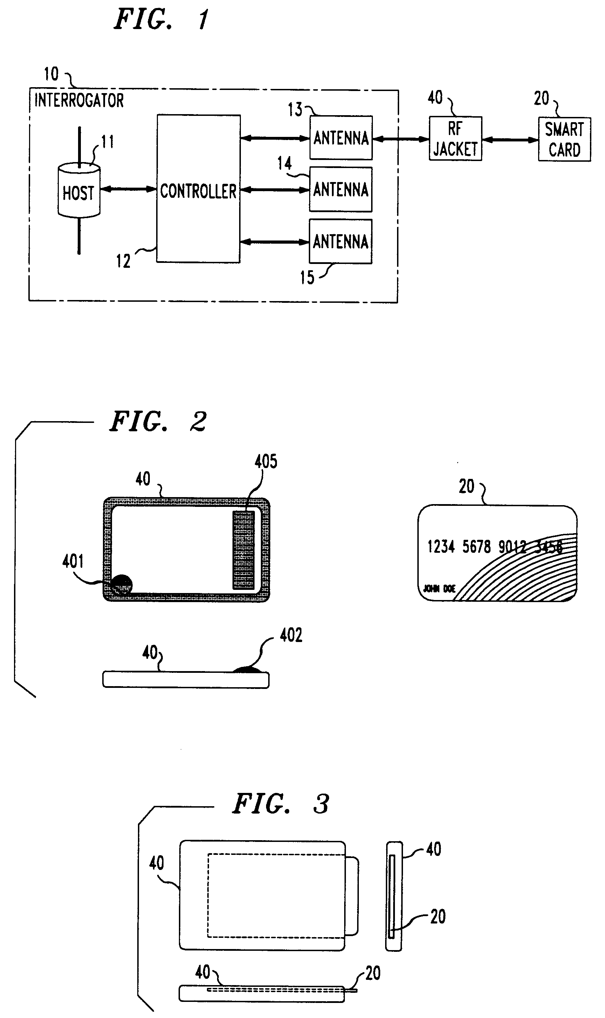

Referring now to FIG. 1, there is shown an illustrative block diagram of an interrogator 10, including a host 11, a controller 12 and a plurality of antennas 13, 14 and 15 geographically dispersed, but otherwise operationally identical. The location of each antenna determines an interrogation site for the interrogator 10. Also shown are a smart card 20, the size of a standard credit card, and a pocket size enclosure or radio-frequency (RF) jacket 40 for holding the smart card and providing smart card interface circuitry.

The host 11 is typically a data base of a provider of a particular service on the smart card 20. The controller 12 may be colocated with or separated from the host 11 and contains switching, control, and all line circuits required by the host 11 for establishing, maintaining and terminating communications between the interrogator 10 and the RF jacket 40 and smart card 20. The jacket 20 performs a multitude of functions including providing operating power in the form of magnetic energy coupled from the jacket to the card 20, and also coupling data between the interrogator 10 and the card 20. Although communications between the interrogator 10 and the RF jacket 40 are illustratively shown as taking place through the antenna 13 in the interrogator 10 and the jacket 40, these communications may take place through either of the illustrated antennas 13, 14 or 15.

The jacket 40 includes a sleeve-like opening adapted to receive and position the smart card 20 for providing the operating power from the jacket to the card and also for enabling read/write communications between the card 20 and the associated interrogator 10. Normally held in the off-state, radiated energy from an interrogation site associated with the interrogator 10 turns on the jacket's internal battery operated power supply when the smart card/jacket combination is within a few feet of the radiation source at the interrogation site. A holder of the smart/card jacket combination is able to conduct, or have conducted for him or her as appropriate, a data transaction with the interrogator 10 either while standing near or moving through an interrogation site for the interrogator. When the smart card/jacket combination is outside of the field of the radiated energy from the interrogation site, power to all the circuitry in the jacket and the card are turned off, thereby extending the operating life for the battery operated power supply.

Referring next to FIGs. 2 and 3, in combination, there are shown the basic structures of the jacket 40 and the smart card 20. The smart card 40 typically is a personal memory card or data card which is usable in a variety of applications, from custom repertory dialing to storage of individual medical and/or banking records. Although the card looks and feels much like an ordinary credit card, the smart card includes a computer, an electrically erasable field-programmable read-only memory and also circuitry for inductively receiving a power signal and capacitive transferring data signals between the card and associated card reader/writer circuitry within the interface circuitry located in the jacket 40. No direct ohmic electrical contact is made between the card and the reader/writer circuitry in the jacket for transferring power to the card 10 via the reader/writer circuitry or for transferring data to and from the card. The card is also reprogrammable by a specially designated interrogator 10 via the reader/writer circuitry in the jacket 40 with new and different data as desired.

Memory cards suitable for use as smart card 20 are known in the art and commercially available from AT&T and other suppliers. Such cards also are described in United States Patent 4,795,898 which issued to H. L. Bernstein et al. on January 3, 1989; United States Patent 4,816,653 which issued to E. C. Anderl et al. on March 28, 1989; and United States Patent 4,882,474 which issued to E. C. Anderl et al. on November 21, 1989. A card reader/writer suitable for use as the reader/writer circuitry in the jacket 40 is described in United States Patent 4,798,322 which issued to H. L. Bernstein et al. on January 17, 1989.

The top surface and a side view of the jacket 40 is depicted in FIG. 2. Also, the smart card 40 is also shown, while removed from the jacket 40. The jacket 40 includes a battery 401 for providing operating power for the electronics therein and for providing operating power to the smart card 20. An optional liquid crystal display (LCD) 405 may be provided on the top surface of the jacket 40 for informing the holder of the card of the results of a particular transaction. Although not shown, a keypad may also be provided on the top surface of the jacket 40 if desired.

The smart card 20 is depicted inserted in the jacket 40 in FIG. 3. An edge of the card extends slightly beyond the right surface of the jacket 40, as depicted in FIG. 3, to facilitate the removal and insertion of the card into this jacket.

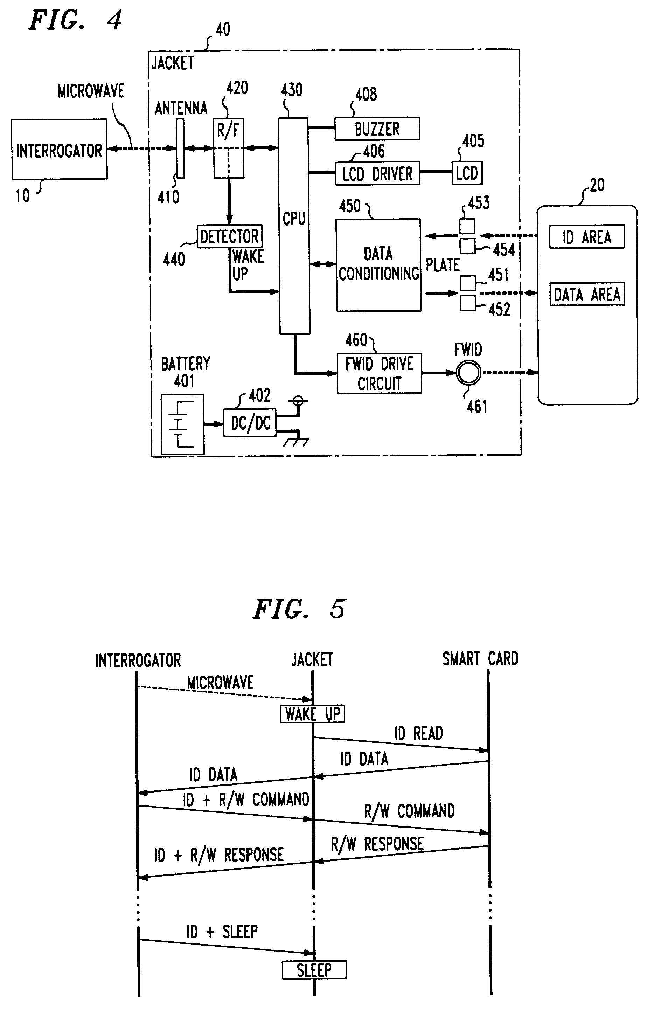

Referring next to FIG. 4, there is shown a high level block diagram of the interface circuitry in the jacket 40 for providing communications between the interrogator 10 and the smart card 20. The interrogator 10 continually radiates a low level interrogating signal, typically on a frequency channel at 2.4 GHz. This signal is radiated at a level sufficient to generate an electrical field reflective of a desired size of an area of operation for each interrogation site, each site having one of the antennas 13, 14 or 15 located thereat.

While outside an area of operation for an interrogation site, the jacket 40 is maintained in a completely OFF state. While in this state, there is no requirement for signal monitoring electronics to be maintained in the active state. Thus standby current consumption is eliminated and the life of the battery 401 in the jacket 40 is substantially prolonged. Alternatively, if a rechargeable battery is employed as battery 401, the time between charges of this battery is substantially increased. This advantageous operation is achieved by a detector circuit 440 described later herein which, in accordance with the invention, permits all current consuming circuits in the jacket and card to remain completely off while the jacket is outside an area of operation for an interrogation site.

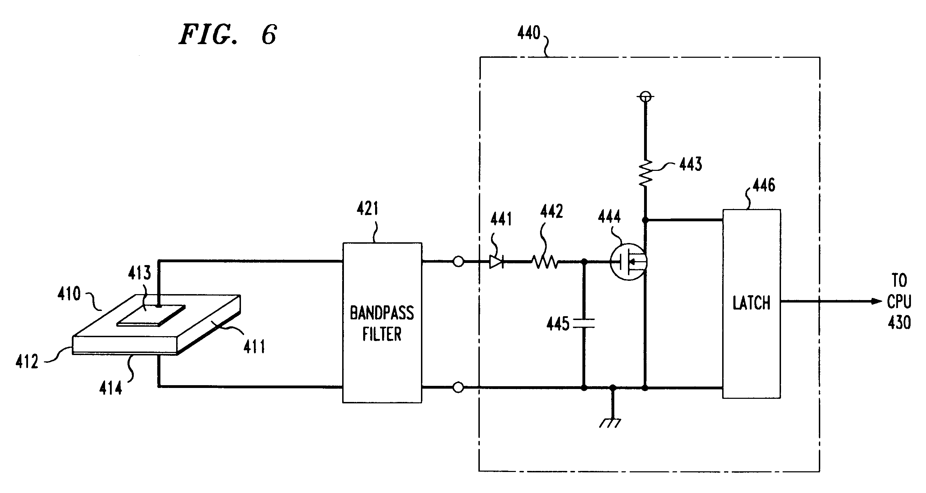

As a holder of the card and jacket enters an area of operation of the interrogator 10, the radio frequency signal energy radiated by an antenna, for example, antenna 13, of the interrogator 40 is captured by the antenna 410. This energy is coupled to the radio-frequency (R/F) section 420 which is used by the jacket 40 in transmitting data to and receiving data from the interrogator 10. This captured energy is also coupled through the R/F section 420 to a detector circuit 440, which, in accordance with the invention, provides a means for configuring a central processing unit CPU 430 from an OFF state to a full ON operating state. Thus the captured energy on the antenna 410, while the jacket 40 is in an area of operation of the interrogator 10, activates the detector 440. This detector circuit 440, in turn, activates the CPU 430. This detector circuit 440 is described in greater detail later herein and with reference to FIG. 6.

The CPU 430 advantageously provides a number of control functions and may be implemented through use of a microcomputer containing read-only-memory (ROM), random-access-memory (RAM) and through use of the proper coding. Such a microcomputer is known in the art and is readily available from semiconductor manufacturers such as Signetics, Intel and AMD.

The CPU 430 provides a means for interfacing the smart card 20 to the interrogator 10. Operating under firmware control provided by its internal ROM, the CPU 430 formats data provided to the smart card 20 via the data conditioning circuit 450 and to the interrogator 10 via the R/F section 420. The CPU 430 also interprets commands from the interrogator 10 received through the R/F section 420 as appropriate. In addition, the CPU 430 checks for errors in reading and writing data to the smart card 20 and in transmissions to and from the interrogator 10.

The data conditioning circuit 450 receives serial data from the CPU 430 and differentially drive capacitive plates 451 and 452 which interface with respectively aligned capacitive plates (not shown) in the smart card 20. The data conditioning circuit 450 converts the serial data from the CPU 430 which is of one polarity, into a differential polarity such that for each transition of the signal from the CPU 430, a potential on one of the capacitive plates goes positive, while a potential on the other capacitive plate goes negative.

The data conditioning circuit 450 also receives differential data from the capacitive plates (not shown) in the smart card 20 that are brought in close proximity with and aligned with the capacitive plates 453 and 454 in the jacket 40. This data from the smart card 20 is coupled to the CPU 430 in the jacket 40 for coupling on to the interrogator 10.

Hysteresis is built into the data conditioning circuit 450 such that a differential pulse greater than the hysteresis is all that is required to switch the output of the data conditioning circuit 450 to the capacitive plates 451 and 452 from a high state to a low state or from a low state to a high state. The hysteresis also aids in preventing noise from causing false triggering of receive circuitry in the data conditioning circuit while receiving data from the smart card 20 by ignoring small differential noise signals and switching only on large differential data signals. Thus once the receive circuitry in the data conditioning circuit 450 switches states, if there is no further input, this receive circuitry will remain in whatever state it is then switched into and not drift back to the other state.

The CPU 430 also provides a means for activating the smart card 20. Once the CPU 430 enters the full ON operating state, it provides an actuation signal to a flexible wafer inductor (FWID) drive circuit 460. This circuit receives its power from the battery 401 which has the voltage stepped up to an appropriate operating level by a DC to DC converter circuit 402. Power to the card 20 is provided from the FWID drive circuit 460 via a FWID 461 which comprises the primary winding of a transformer. This primary winding comprises a multiturn coil of electrically conductive material and a ferrite core positioned to direct the transmission of magnetic energy into a flat multiturn coil (not shown) located in the smart card 20. The transformer is formed when this primary winding in the jacket 40 is mated to the secondary winding in the smart card 20. A transformer suitable for use in coupling power into the card from the jacket is disclosed by R. L. Billings in U. S. Patent 4,692,604 which issued on September 8, 1987.

The CPU 430 also provides a means for providing a user interface so that a holder of the card 20 will be informed when a transaction has taken place, either because of the information that is shown on a visual display such as provided by the LCD driver 406 and LCD 405 or an audible indication provided by a buzzer 408.

Referring next to FIG. 5, there is shown a simplified diagram for illustrating the interaction between the interrogator, the jacket and the smart card for facilitating two-way read/write communications over a radio frequency channel. Power to the jacket 40, and thus to the card 20 are turned off when these units are outside of the reception range of an interrogation site associated with an interrogator. The jacket 40 thus normally resides in a power OFF state thereby conserving battery life, in accordance with the invention.

As earlier indicated herein, the interrogator 10 continually radiates a low level interrogating signal, typically at 2.4 GHz which covers the proximate desired area of operation for each interrogation site. As a holder of the card enters the area of operation of the interrogation site, the radio frequency signal radiated by the antenna of the interrogator results in an activation signal being provided to the CPU 430 in the jacket 40, as described later herein with reference to FIG. 6. Once the CPU 430 wakes up, it provides power to the smart card 20 and also generates and sends its own interrogation signal to the smart card for the card to provide its identification (ID) data to the interrogator 10. The ID data provided by the card uniquely identifies a particular card to the interrogator 10. Upon receiving the query, the smart card 10 generates its ID data and returns this information to the interface circuitry in the jacket 40. The jacket in turn couples this ID data to the interrogator 10.

The interrogator 10 receives this ID data and then sends a read/write (RW) command plus the ID data back to the jacket 40. The R/W command is accompanied by the ID data to prevent the interrogator 10 from erroneously affecting the data in any other similarly configured, nearby smart card which also might be activately communicating with another interrogator, or with the same interrogator at a different interrogation site, at the time that the R/W command is transmitted.

The R/W command from the interrogator may be provided in a number of forms. It may be provided in a form which debits an account in the smart card while the holder is in the vicinity of the interrogation site. When a holder uses a public transit system such as a subway, for example, the card is initially read and the location of entry entered into the card. Then as the holder of the card leaves the subway, the appropriate amount is debited from the account in the smart card. This command may also be provided in a form which appends to an account in the smart card. Further, The read/write command may simply allow entrance to some limited access area or location to the holder of the card having the provided ID data once the holder provides some additional identifying information, such as, for example, a voice print. Still further, the read/write command may allow the holder of the card to access a particular data base such as an automatic teller machine (ATM) while the holder simply is in the vicinity of a interrogation site. The holder is able to access such a data base for transactions therein after he or she provides some additional identifying information such as the voice print and/or a spoken or keypad entered password.

Once the read/write command is received from the jacket 40 by the smart card 20, the appropriate action in the smart card is executed and a response for the interrogator 10 is generated. The jacket 40 couples the read/write response along with the ID of the smart card to the interrogator 10 for providing an indication that the appropriate action in the card has been taken. If necessary, other commands are generated by the interrogator 10 and responded to by the smart card 20. Once the final command has been responded to by the card 10, the interrogator sends a sleep command to the jacket accompanied by the ID of the card and jacket. The CPU 430 then turns itself, and all of the interface circuitry in the jacket 40, off. This, in turn, turns off the power to the smart card 20. The jacket is thus returned to its power OFF state.

In the operation of the interrogation system, users of the card and jacket are funnelled into designated passageways sufficiently near the radiation source so that normal movement of these users will allow adequate time for complete interrogating of and any necessary writing to the card. If a holder of the card and jacket enters into and then moves out of the communication range of the interrogator 10 without an initiated transaction being completed, a timer function provided in the CPU 430 will time-out turning off the interface circuitry in the jacket 40 and also power to the smart card 20. Such a result could occur if a holder of a card approaches an interrogation site and then turns and goes in the opposite direction from the radiation source. In this scenario, the interrogator 10 will probably not have adequate time to go through a complete interrogation, including its write command to the card 20. For such an occurrence, no change is made to the data stored in the data area of the card 20.

Referring next to FIG. 6, there is shown an illustration of the antenna 410, a bandpass filter 421 suitable for use in the R/F circuit 420 of the jacket 40, and details of the detector circuit 440, in accordance with the invention.

Antenna 410 is illustrative shown as a microstrip antenna which is fabricated on a printed circuit board 411 comprising a dielectric substrate 412, a microstrip element 413 and a metal ground plane 414. Microstrip antennas are well-known in the art. A general overview of microstrip antennas and their design is provided by Richard C. Johnson, *Antenna Engineering Handbook,* Third Edition, McGraw-Hill, Inc., 1993. Although a microstrip antenna is shown, for efficient operation at the intended frequency of operation, i.e., 2.4 GHz, it is to be understood that other antennas are equally operable in accordance with the principles of the disclosed invention.

When in the electric field generated by the interrogation site, an interrogating signal from the antenna, for example antenna 13, of the interrogator 10 is received by the antenna 410. This signal is coupled to the bandpass filter 421, located in the R/F circuit 420. This bandpass filter 421 provides selectivity for the detector 440 by limiting the detected radiated energy being coupled thereto to that of the frequency being radiated by the antenna 13 in the interrogator 10. This advantageously avoids extraneous frequency signals having a sufficient signal strength from activating the detector 440. Bandpass filter 421, like antenna 410, may be fabricated on a printed circuit board, such as printed circuit board 411, for efficient operation at the frequency radiated by the antenna 13. Bandpass filters intended for limiting receive signal energy to a range of frequencies, including microwave frequencies, are well-known in the art. A general discussion of the design of bandpass filters at microwave frequencies is provided by Peter A. Rizzi, *Microwave Engineering Passive Circuits,,* Prentice-Hall, Inc, Englewood Cliffs, New Jersey, 1988.

The interrogating signal from the antenna 13 is coupled from the bandpass filter 421 to the detector 440. Included in detector 440 is a diode 441, resistors 442 and 443, a metal oxide semiconductor field effect transistor (MOSFET) 444, a capacitor 445 and a latch 446.

In detector 440, the received interrogating signal is rectified by diode 441 before being coupled through resistor 442 and accumulating a charge on capacitor 443. When the charge on capacitor 445 reaches a sufficient level, MOSFET 444 turns on and actuates the latch 446. Once actuated, latch 446 remains in an ON state for a predetermined period of time, typically less than five seconds for most transactions when the holder of the card is moving past the interrogation site, to permit completion of a transaction between the interrogator 10 and the smart card 20. If the transaction is not completed within the allotted time, and the holder of the card is still in the vicinity of the antenna of the interrogator 10, the accumulated signal on capacitor 445 continues to holds the latch in the ON state for completion of the transaction. Circuitry suitable for performing the function of Latch 446 is readily available in the art. Latch 46 may, for example, be a well known and readily available retriggerable monostable multivibrator.

The output signal from latch 446 is coupled to the CPU 430 for waking up this unit from its power OFF state so that the interface circuitry in the jacket 40 becomes operational. When the jacket becomes operational, it enables the read/write communications between the card 20 and the interrogator 10.

What has been described is merely illustrative of the present invention. Other applications to smart cards, computer or other user interactive systems other than the disclosed system may be utilized.

## Claims

1. A portable enclosure for a data card comprising:
card interface circuit means;
means for communicating over a radio frequency channel with a remotely located interrogation station; and
activation means for configuring both the card interface circuit means and the communicating means from a power-off state to a power-on operating state when the enclosure is brought within the reception range of a radiation pattern generated by said remotely located interrogation station.

2. The portable enclosure as in claim 1 wherein the activation means further includes means for providing operating power to the data card when the portable enclosure is configured in the power-on operating state, the smart card being positioned in the portable enclosure for receiving said operating power.

3. The portable enclosure as in claim 2 wherein the activation means prevents the power operating means from providing operating power to the data card when the portable enclosure is configured in the power-off state.

4. The portable enclosure as in claim 3 wherein all current consuming circuitry in the portable enclosure is configured in a power off-state while the portable enclosure is in said power-off state, and all current consuming circuitry in the portable enclosure is configured in a power-on operating state while the portable enclosure is in said power-on operating state.

5. The portable enclosure as in claim 1 wherein the activation means configures both the card interface circuit means and the communicating means to the power-off state when the enclosure is located outside of the reception range of the radiation pattern of the remotely located interrogation station.

6. The portable enclosure as in claim 2 wherein the activation means further includes means for detecting the presence of radiated energy from the interrogation station.

7. The portable enclosure as in claim 6 wherein the detecting means includes antenna means for capturing the energy from the radiation pattern of the interrogation station

8. The portable enclosure as in claim 7 wherein the detecting means further includes means for accumulating energy from the radiation pattern of the interrogation station and switching means responsive to the energy level in the accumulating means, the switching means changing states when the energy level in the accumulating means reaches a predetermined level, and the detecting means further including latching means responsive to the state change of said switching means for providing an enabling signal for configuring both the card interface circuit means and the communicating means in the power-on operating state.

9. The portable enclosure as in claim 1 wherein the card interface circuit means includes a data conditioning circuit.

10. The portable enclosure as in claim 9 wherein the card interface circuit means further includes capacitive coupling means for transferring data from the data conditioning circuit to the data card and from the data card to the data conditioning circuit.

11. The portable enclosure as in claim 10 wherein the communicating means includes means for receiving data from the remotely located interrogation station and for transmitting data to said remotely located interrogation station.

12. The portable enclosure as in claim 11 further comprising a central processing means, said central processing means receiving data from the communicating means and transmitting this data to the data conditioning circuitry.

13. The portable enclosure as in claim 12 wherein the central processing means receives data from the data conditioning circuitry and transmits this data to the communicating means.

14. The portable enclosure as in claim 10 wherein the card interface circuit means further includes energy coupling means for transmitting magnetic energy from the enclosure to the data card, the magnetic energy providing operating power for the data card.

15. The portable enclosure as in claim 14 wherein the energy coupling means includes a primary section of a transformer.

16. The portable enclosure as in claim 15 wherein the transformer primary section comprises a multiturn coil of electrically conductive material and a ferrite core positioned to direct the transmission of the magnetic energy into the data card.

17. A portable enclosure for a data card comprising:
card interface circuit means;
means for communicating over a radio frequency channel with a remotely located interrogation station; and
activation means for configuring the portable enclosure from a power-off state to a power-on operating state when the enclosure is brought within the reception range of a radiation pattern generated by said remotely located interrogation station, while the portable enclosure is in the power-off state, all current consuming circuitry in the portable enclosure being similarly configured in said power off-state and while the portable enclosure is in the power-on operating state, all current consuming circuitry in the portable enclosure being similarly configured in said power-on operating state.

18. The portable enclosure as in claim 17 wherein the activation means configures the portable enclosure to the power-off state when the enclosure is located outside of the reception range of the radiation pattern of the remotely located interrogation station.

19. The portable enclosure as in claim 17 wherein the activation means further includes means for providing operating power to the data card when the portable enclosure is configured in the power-on operating state, the smart card being positioned in the portable enclosure for receiving said power.

20. The portable enclosure as in claim 19 wherein the activation means prevents the power operating means from providing operating power to the data card when the portable enclosure is configured in the power-off state.
